# EUROPEAN PATENT APPLICATION

(11) **EP 0 982 795 A1**
(43) Date of publication of application: **01.03.2000**
(21) Application number: 98306842.0
(22) Date of filing: 26.08.1998
(51) Int. Cl.: H01Q 1/24, H04B 1/38, H01Q 9/04, G04G 1/00

(54) **Mobile communications terminal**

(71) Applicant: ICO Services Ltd., London W6 9BN (GB)
(72) Inventor: Poisson, Lionel, London W4 1DD (GB)
(74) Representative: Musker, David Charles

(57) **Abstract**

An antenna assembly for use with a mobile communications terminal, characterised in that the assembly comprises at least one patch antenna and at least one solar cell.

## Description

This invention relates to a mobile communications terminal, such as a mobile phone, particularly but not exclusively a mobile phone for use with a satellite communications system.

The users of mobile communication devices in general, and specifically mobile phones, are limited in the duration over which the devices may be used by the power supply available. Conventionally this takes the form of a rechargeable battery, which must be recharged or replaced with a spare, charged battery when its power is depleted.

This problem is exacerbated in isolated areas where it may be difficult to locate a dealer from which to obtain a replacement battery pack. Furthermore, in such isolated areas, it may be impossible for the user to recharge a battery pack due to the lack of a suitable electrical supply. Thus, the user is faced with the expense and inconvenience of carrying spare batteries to that area, or reducing his use of the communications device.

The use of solar cells, mounted on the surface of a mobile phone body has been investigated in order to supplement the battery power in the mobile phone in order to alleviate this problem.

WO 90/13196 discloses a telephone handset incorporating solar cells mounted upon the surface of the body of a handset. The solar cells generate an electrical current which trickle charges an internally mounted battery when they are exposed to light.

Such cells are located on areas of the outer surface of the phone which are not used for other functions, such as the display or keypad. This tends to mean that the solar cells are positioned on the back and sides of the phone body. However, these areas tend to be covered by the hand of the mobile phone user during use. Solar cells which are covered by the hand in this manner during use do not contribute to the charging of the battery during use.

Furthermore, it is generally not desirable to leave electronic equipment such as mobile telephones in direct sunlight for extended periods.

In order to address this problem manufacturers of such devices tend to use large quantities of solar cells in order to ensure that some cells at least charge the battery when the handset is in use. Consequently, this leads to an increase in manufacturing costs and the costs of component parts.

As handsets have been improved, they have become smaller with ergonomically improved designs. This has lead to a difficulty in locating sufficient numbers of solar cell on the handset.

This problem has been partially addressed by US 5,579,388 which discloses a method of manufacturing solar cells which may be laminated onto a surface of a telephone handset, which is curved in one dimension. This solution does not fully address the problem for modern day mobile phones which are becoming increasingly small and frequently have complex three dimensional contours. Furthermore, due to the increased functionality which they offer, an increasingly large proportion of the outer surface of mobile phones is unsuitable for the location of solar cells, being already designated for other functions.

Therefore, there is a need for a mobile phone which addresses some of the above mentioned problems.

In accordance with the present invention there is provided an antenna assembly for use with a mobile communications terminal, characterised in that the assembly comprises at least one patch antenna and at least one solar cell.

Advantageously, the present invention gives rise to an effective and inexpensive method of augmenting the power supply used to drive the phone antenna and operate the electronic circuits associated with the mobile phone, such as powering its internal memory and display.

This is especially useful in the case of a satellite mobile phone, where the user may frequently wish to use the mobile phone in isolated areas. Even though the power supplied by the solar cells is insufficient for voice communications, it will maintain the phone memory and display so the user can inspect and manipulate stored data (e.g. messages or phone lists).

By mounting the solar cells on the antenna assembly, the possibility of the user occluding the solar cells with his hand while using the phone is reduced.

Preferably, the antenna assembly may be moved between extended and retracted states. This gives rise to the possibility of reducing the size of the mobile communications terminal when it is not in use. Furthermore, it allows the patch antenna to be concealed when the terminal is not in use, thereby protecting it from damage. However, it also allows the solar cells to be located on the exterior of the body of the terminal, allowing them to generate auxiliary power irrespective of whether the phone is in use or not.

Advantageously, a mobile phone according to one aspect of the present invention reduces the degree to which the user is irradiated by the electromagnetic radiation emitted by the antenna, as the solar cells may be used to increase the shielding of the user from the antenna.

Other aspects and embodiments of the invention, with corresponding objects and advantages, will be apparent from the following description and claims. The invention will now be illustrated by way of example only, with reference to the accompanying drawings, in which:
Figure 1a is a block diagram showing schematically the elements of a first communications system in which the present invention may be used;
Figure 1b illustrates schematically the beams produced by a satellite in the embodiment of Figure 1;
Figure 2 is a diagram showing schematically the elements of mobile terminal equipment of the present invention;
Figures 3a and 3b illustrate a mobile phone according to a first embodiment of the invention, from the side, in the retracted and the extended state respectively;
Figures 4a to 4c illustrate a mobile phone according to the second embodiment of the invention, from the front, behind and from the side respectively, in the extended state.
Figures 5a to 5c illustrate a mobile phone according to a second embodiment of the invention, from the front, behind and from the side respectively, in the non-extended state.
Figure 6 illustrates a mobile communications terminal according to a third embodiment of the invention.

### GENERAL DESCRIPTION OF SYSTEM AND TERMINAL

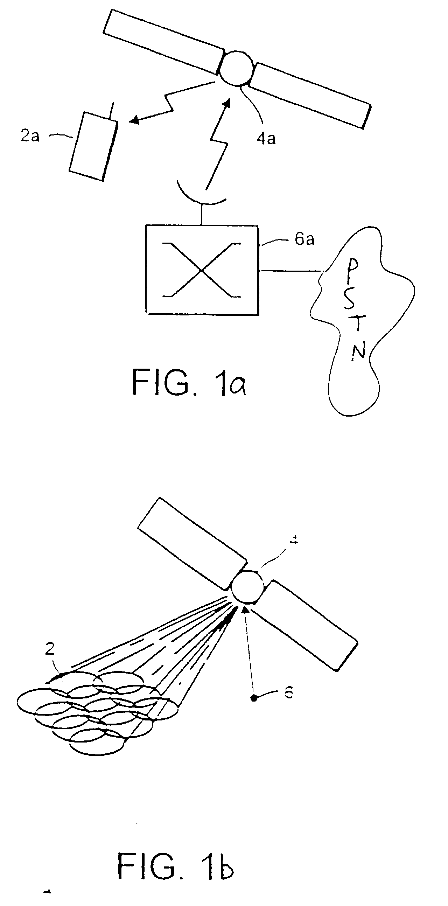

Referring to Figure 1a, a satellite communications comprises mobile user terminal equipment 2a, 2b (e.g. handsets 2a and 2b); orbiting relay satellites 4a, 4b; and satellite earth station nodes 6a, 6b connected to a terrestrial (e.g. public switched) telecommunications network.

As shown in Figure 1b, each satellite 4 is arranged to generate an array of beams covering a footprint beneath the satellite, each beam including a number of different frequency channels and time slots, as described in GB 2293725.

On each beam, the satellite therefore transmits a set of downlink frequencies. The downlink frequencies on adjacent beams are different, so as to permit frequency re-use between beams. Each beam therefore acts somewhat in the manner of a cell of a conventional terrestrial cellular system.

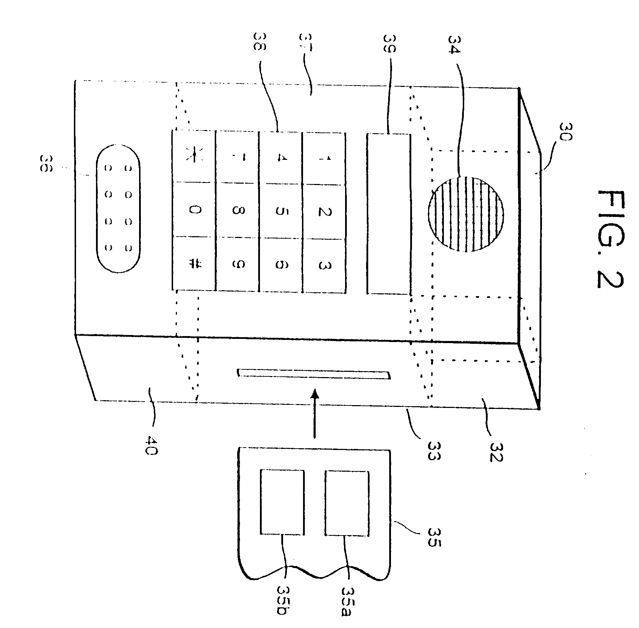

Referring to Figure 2, the general components of a mobile terminal handset equipment 2 of Figure 1 is shown.

Electrical details of the handsets 2 do not form part of the present invention, but they may comprise handsets similar to those presently available for use with the GSM system, comprising a digital low rate coder/decoder 30, together with conventional microphone 36, loudspeaker 34, battery 40 and keypad components 38, and a radio frequency (RF) interface 32 and antenna 31 (not shown in Figure 2; discussed below) suitable for satellite communications. A display 39 (for example a liquid crystal display) and a 'smart card' reader 33 receiving a smart card (subscriber identity module or SIM) 35 storing user information are also provided.

Also provided is a control circuit 37 (which may in practice be integrated with the coder 30) consisting of a suitably programmed microprocessor,microcontroller or digital signal processor(DSP) chip.

### First embodiment

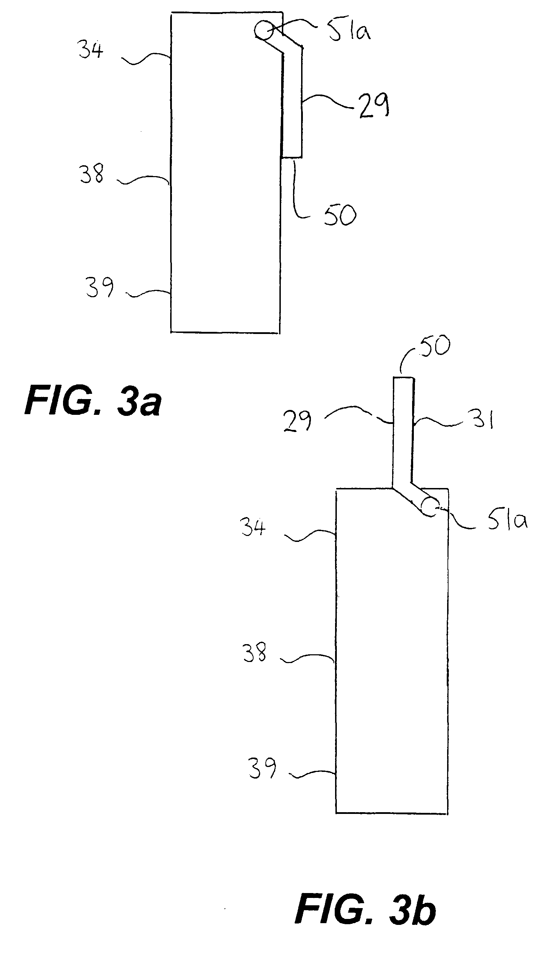

Referring to Figure 3, in a first embodiment of the invention, the mobile phone body carries a plate 50, hinged at the rear surface of the phone 2 (i.e. the surface which does not carry the microphone, loudspeaker and keypad) at a pair of pivot points 51, 51b (only 51a is shown).

Plate 50 has mounted thereon solar cells 29, as seen in Figure 3a. The solar cells 29, when exposed to light, generate electricity which augments the charge stored in an internal battery 40 (not shown), as discussed in WO 90/13196 (incorporated by reference herein in its entirety).

On the opposite face thereof, plate 50 has mounted thereon a patch antenna 31 (shown in Figure 3b). The antenna 31 comprises two separate patches, transmission patch 31a and reception patch 31b, as the dimensions of the patches 31a and 31b are related to the respective wavelengths of the emitted and received signals (e.g. they are quarter-wavelength patches).

Thus, in the closed or retracted position of Figure 3a, the patch antenna is held directly inwardly against the mobile phone body, and is hence protected from damage. On the other hand, the solar cell array 29 is exposed, allowing the phone to be left, face down, to charge.

When it is desired to use the mobile phone, the plate 50 is raised into the extended position shown in Figure 3b, in which the patch antenna 31 is held upright so that its main radiation pattern is directed towards or above the horizon. The solar cell array 29 is directed towards the upper part of the head of the user. Since the periods of non-use are usually substantially longer than the periods of use, the solar cell array is usually exposed to the sunlight (where available).

### Second embodiment

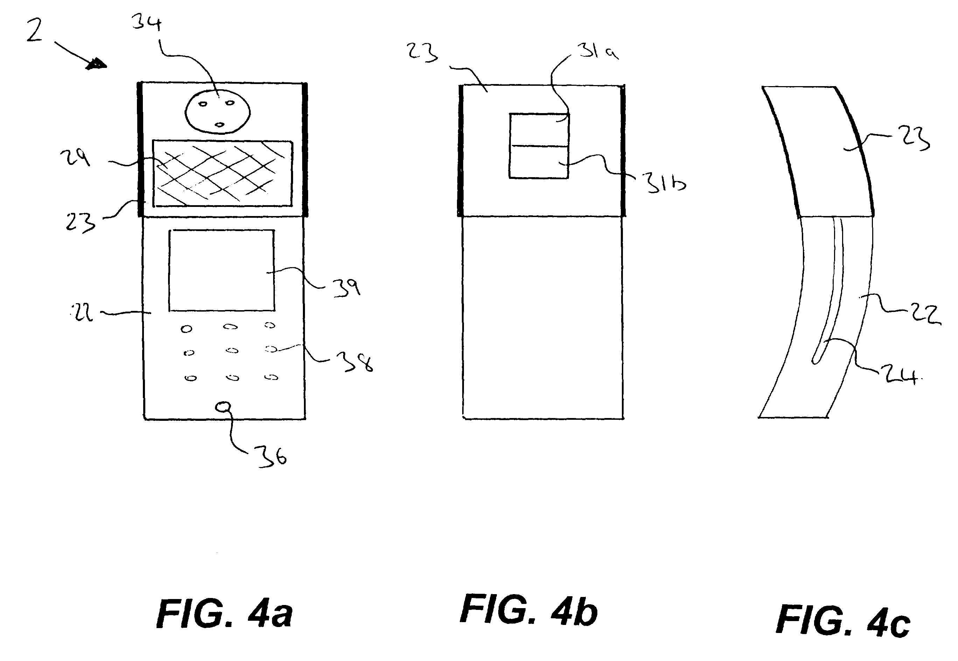

Referring to Figure 4, a mobile phone, generally designated by the numeral 2, according to the second embodiment of the present invention is shown. The mobile phone 2 is manufactured using standard production techniques and components. The body of the phone 2 is manufactured from injection moulded plastics material and is formed in two halves, having a lower body portion 22 and an upper body portion 23. The lower body portion 22 houses a conventional display screen 39, a keypad of numeric and control keys 38 and a microphone 36.

The lower body portion 22 also has a groove 24 (seen in Figure 4c), running partially along the length of each side of the housing portion 22. The upper body portion 23 has corresponding rails 28, which engage the grooves 24 and allow the upper body portion 23 to slide linearly with respect to the lower body portion 22 between two limits, which define the extended state, employed when the phone is being used and the non-extended state, employed when the phone is being stored between uses.

The limits are defined by protuberances (not shown) in the grooves 24 of the lower body portion 22, against which the rails 28 of the upper body portion 23 are arranged to abut. The protuberances are designed to engage the respective ends of the rails 28 and to lock the upper body portion 23 in position respect to the lower body portion 22 when either of the limits is reached. However, the user may overcome this locking mechanism by forcing the rails 28 over the protuberances in order to move the mobile phone from one position to the other.

The upper body portion 23 has mounted thereon solar cells 29, as seen in Figure 4a.

On the same side of the upper body portion 23 as the solar cells 29, is located a loudspeaker 34. As can be seen from Figure 4b, the reverse side of the upper body portion 23 has mounted thereon a patch antenna 31 comprising two separate patches, transmission patch 31a and reception patch 31b

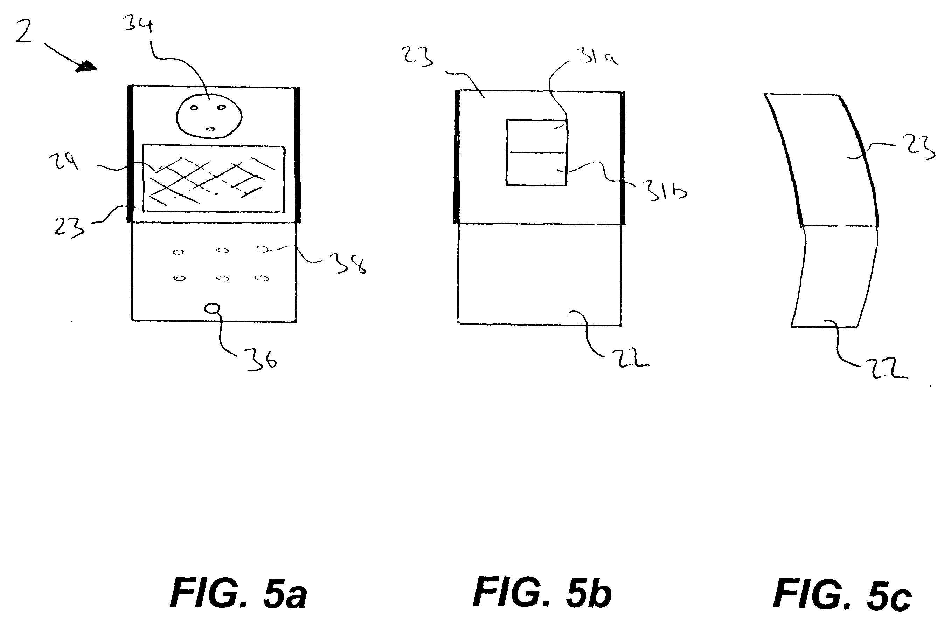

Normally, when the mobile phone 2 is not being used, the upper body portion 23 will be in its non-extended state as is shown in Figures 5a-5c, in order to conserve space and also to increase the robustness of the device. Furthermore, in this state, as can be seen from Figure 5b, the patches 31a and 31b are concealed between the upper body portion 23 and the lower body portion 22 of the mobile phone. Thus, when the phone is not being used, the patches 31 are protected from any accidental damage which might otherwise occur to them.

It will also be noted that in the closed state, as can be seen from Figure 5a, the solar cells 29 are still located on the exterior surface of the phone. Therefore, even during periods of non-use, the internal battery 40 of the phone will continue to be recharged when the front of the phone is exposed to light.

The shape of the phone in the extended state, as shown in Figure 4c, is such that the user may conveniently hold the phone by the lower body portion in one hand without any risk of occluding the patch antennas 31a and 31b which would result in a loss in signal strength. As can also be seen from Figures 4c, the shape of the phone 2 is arranged so that the user may easily hold the phone such that the microphone 36 is located near the user's mouth, whilst the loudspeaker 34 is located near to the user's ear.

Furthermore, it can be seen from Figure 4c that when the phone is in the extended position the attitude of the patches 31 is directed upwards with respect to the horizontal. This is advantageous in the case where the present invention is applied to a satellite phone, where the emitted signal may be directed toward a communication satellite above the horizon. This allows the gain of the antenna to be increased, thus reducing the power required to drive the antenna.

In the present embodiment, further solar cells 29 may be incorporated on the reverse side of the upper body portion 23, adjacent to the patch antenna 31. If required, the solar cells 29 may be positioned exclusively on the reverse side of the upper body portion, adjacent the patch antenna 31.

### Third embodiment

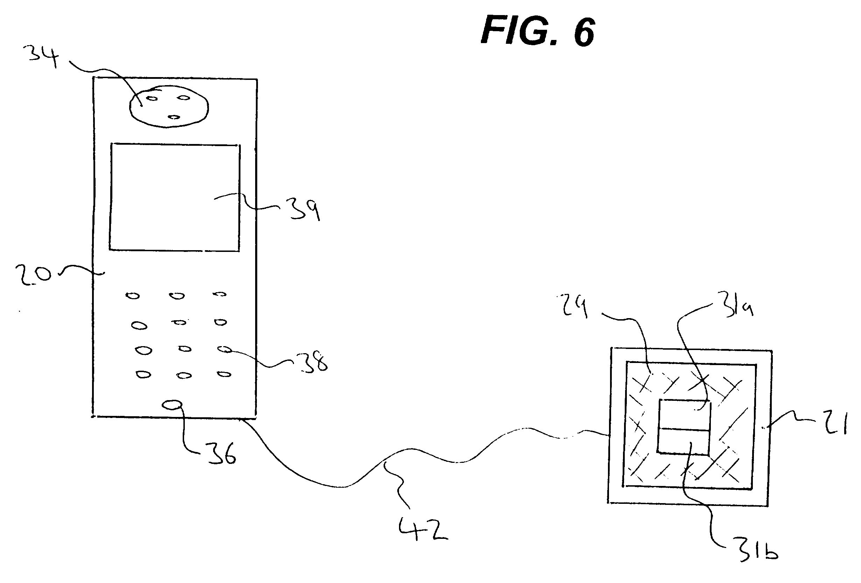

Referring to Figure 6, a mobile phone generally designated by the numeral 20, according to the third embodiment of the present invention is shown.

As in the second embodiment, the phone 20 comprises a conventional display screen 39, a keypad of numeric and control key 38, a microphone 36 and a loudspeaker 34.

However, unlike the mobile phone of the second embodiment, the phone 20 comprises an antenna assembly 21 which is arranged, at least in use, to be detached from the body of mobile phone 20. As was described in the second embodiment, the antenna assembly 21 utilises a patch antenna 31 which has separate emitting and receiving patches 31a, 31b.

On the same side of the antenna assembly 21 are situated solar cells 29, which are arranged to provide additional charge to the internally mounted battery 40 (not shown) of the mobile phone 20; thus allowing the user to manually direct the antenna and solar cells to improve signal strength and electrical power generation. During use, or charging, the antenna assembly 21 is connected to the phone 20 via a connecting wire 42, which carries both the recharging current generated by the solar cells 29 and the received and emitted radio communication.

In this embodiment, the antenna assembly 21 may be attached to the back of the body of the mobile phone 2 during periods of non-use for stowage purposes, using suitable mechanical means (not shown) with the connecting wire being stowed internally in the phone body. In this state the solar cells 29 will continue to charge the battery 40 when exposed to light.

As was the case in the previous embodiment, the solar cells 29 may be situated on both sides of the antenna assembly 21 in order to increase the generated electrical power.

Although single patch embodiments have been disclosed above, where the wavelength used to communicate is sufficiently short (e.g. millimetre wavelengths) there may be sufficient space to accommodate an array of patch elements. In this case, variable phasing electronics may be provided, to enable the transmission and reception beams to be steered (for example to point at a satellite where its position is known).

It will be apparent from the foregoing that various modifications and variations may be employed in relation to the above described embodiment without departing from the spirit or scope of the present invention.

For example, the invention could equally be applied to a non-voice communication device such as a facsimile device.

A mobile phone according to the present invention may employ various forms of housing to which the antenna assembly is mounted, such as two housing portions arranged to hinge with respect to one another between extended and non-extended states.

## Claims

1. An antenna assembly for use with a mobile communications terminal, characterised in that the assembly comprises at least one patch antenna and at least one solar cell.

2. An antenna assembly according to claim 1, wherein said at least one patch and said at least one solar cell are located on opposing sides of said antenna assembly.

3. An antenna assembly according to claim 1, wherein said at least one patch and said at least one solar cell are located on the same side of said antenna assembly.

4. An antenna assembly according to any preceding claim, wherein said assembly may be moved between a non-extended position and an extended position.

5. An antenna assembly according to claim 4, wherein said at least one patch is concealed in the non-extended position and exposed in said extended position.

6. An antenna assembly according to claim 4 or claim 5, wherein said at least one solar cell is exposed in both said non-extended position and said extended position.

7. An antenna assembly according to any preceding claim, arranged to be detached from said mobile communications terminal in use.

8. An antenna assembly according to any preceding claim, wherein said at least one patch forms part of a steerable array, arranged to track a further communication means and to direct radio emission towards said further communication means.

9. An antenna assembly according to any preceding claim, wherein said antenna assembly comprises a first patch to emit a communications signal and a second patch to receive a communications signal.

10. A mobile phone comprising an antenna assembly according to any preceding claim.

11. A satellite mobile phone comprising an antenna assembly according to any preceding claim.
